Europäisches Patentamt

European Patent Office

Office européen des brevets

(11) Veröffentlichungsnummer : **0 100 998**
B1

(12) **EUROPÄISCHE PATENTSCHRIFT**

(45) Veröffentlichungstag der Patentschrift :
06.05.87

(21) Anmeldenummer : 83107619.5

(22) Anmeldetag : 02.08.83

(51) Int. Cl.⁴ : **C 03 B 37/025**, C 03 C 15/00,
C 03 C 21/00

(54) Verfahren zur Herstellung einer Glasfaser mit einem radialen Brechzahlprofil.

(30) Priorität : 13.08.82 DE 3230199

(43) Veröffentlichungstag der Anmeldung :
22.02.84 Patentblatt 84/08

(45) Bekanntmachung des Hinweises auf die Patenterteilung : 06.05.87 Patentblatt 87/19

(84) Benannte Vertragsstaaten :
AT BE CH DE FR GB IT LI NL SE

(56) Entgegenhaltungen :
DE-A- 3 031 147
DE-A- 3 031 160
FR-A- 2 428 618
FR-A- 2 453 115
GB-A- 2 094 988

(73) Patentinhaber : Siemens Aktiengesellschaft Berlin und München
Wittelsbacherplatz 2
D-8000 München 2 (DE)

(72) Erfinder : Schneider, Hartmut, Dr.rer.nat.
Blütenstrasse 12
D-8000 München 40 (DE)
Erfinder : Lebetzki, Egon
Riemerschmid-Strasse 22
D-8000 München 45 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

## Beschreibung

Die vorliegende Erfindung betrifft ein Verfahren zur Herstellung einer Glasfaser mit einem radialen Brechzahlprofil nach dem Oberbegriff des Patentanspruchs 1.

Ein Verfahren der genannten Art ist aus der GB-A-2 084 988 bekannt. Bei diesem Verfahren soll eine zentrale Brechzahlsenke, die beim Kollabieren entsteht, vermieden werden. Dazu wird das Kollabieren in Gegenwart eines Ätzgases vorgenommen.

Es ist auch bereits ein Verfahren zur Herstellung von Fasern mit einem im Faserkern eine höhere Brechzahl als im Fasermantel aufweisenden radialen Brechzahlprofil vorgeschlagen worden, bei dem ein Glasrohr während des Kollabierens mit einem diffusionsfähigen Dotierstoff dotiert wird. Dazu sind als diffusionsfähige Stoffe lediglich Brechzahl erhöhende Stoffe vorgeschlagen worden. Eine praktische Anwendung hat sich wegen der geringen Diffusionsgeschwindigkeit der meisten Glaskomponenten nicht ergeben.

Für spezielle Zwecke, beispielsweise die Angleichung der Fortpflanzungsgeschwindigkeit in bimodalen Fasern zur Erzielung eines Quasi-Monomodeverhaltens kann es jedoch erwünscht sein, Fasern mit einem radialen Brechzahlprofil herzustellen, welche eine zentral liegende Brechzahlsenke aufweisen (beispielsweise ein M-förmiges Profil).

Ein derartiges Brechzahlprofil mit zentraler Brechzahlsenke könnte — ähnlich wie ein Parabolprofil zweiter Ordnung in Gradientenfasern — durch einen Vielschichtaufbau realisiert werden. Dies ist jedoch bei kleinem Kerndurchmesser, wie er bei Monomode- oder Quasi-Monomodefasern vorliegt, schwierig.

Aufgabe der Erfindung ist es daher, ein Verfahren zur Herstellung einer Glasfaser mit einem radialen Brechzahlprofil zu schaffen, mit dem Brechzahlprofile mit zentraler Brechzahlsenke auch bei kleinem Kerndurchmesser, insbesondere Monomode- oder Quasi-Monomodefasern mit beispielsweise M-förmigem Profil, auf einfache Weise hergestellt werden können.

Diese Aufgabe wird durch die im kennzeichnenden Teil des Patentanspruchs 1 angegebenen Merkmale gelöst.

Die Erfindung beruht u. a. auf der Erkenntnis, daß die bei Brechzahl erhöhenden Dotierstoffen wegen der geringen Diffusionsgeschwindigkeit auftretenden Schwierigkeiten bei zumindest einem die Brechzahl erniedrigenden Dotierstoff nicht auftreten.

Aus der DE-A-30 31 147 oder der DE-A-30 31 160 ist es bekannt, daß Fasern mit radialem Brechzahlprofil, insbesondere Gradientenfasern eine auf der Faserachse liegende Brechzahlprofilstörung aufweisen. Gemäß den genannten Druckschriften läßt sich eine solche Störung vermeiden bzw. verringern, wenn während der Kollabierung des Glasrohres, das auf der Innenseite mit höher brechendem Glas beschichtet ist, eine Ätzung der Rohrinnenwand mit einem Ätzgas vorgenommen wird. Durch Verwendung eines solchen Ätzgases, wobei die Ätzgaskonzentration so gewählt wird, daß die Diffusionsfront des Dotierstoffes schneller als die Ätzfront ist, kann durch Abtrag der sonst durch unkontrollierte Verdampfunggestörten Innenschicht eine Faser mit besonders schmaler Brechzahlsenke hergestellt werden.

Bevorzugterweise wird ein Ätzgas verwendet, das gemäß Anspruch 2 den die Brechzahl erniedrigenden, diffusionsfähigen Dotierstoff chemisch gebunden enthält.

Als besonders vorteilhaft hat sich gemäß Anspruch 3 ein aus einer Fluorverbindung bestehendes Ätzgas erwiesen. Fluor hat im Vergleich zu die Brechzahl erhöhenden Dotierstoffen eine hohe Diffusionsgeschwindigkeit.

Bevorzugt wird Schwefelhexafluorid verwendet (Anspruch 4).

Vorteilhaft ist es auch, gemäß Anspruch 5, das Verfahren in Gegenwart von Sauerstoff im Inneren des Rohres vorzunehmen, insbesondere in Verbindung mit Schwefelhexafluorid nach Maßgabe des Anspruchs 6.

Die Erfindung wird anhand der Figuren in der folgenden Beschreibung näher erläutert. Es zeigen

Figur 1 das Brechzahlprofil einer mit dem erfindungsgemäßen Verfahren unter Verwendung von Schwefelhexafluorid und Sauerstoff hergestellten Monomodefaser mit einer nicht allzu tief ausgeprägten zentralen Brechzahlsenke, und

Figur 2 das Brechzahlprofil einer durch das gleiche Verfahren, aber mit einer etwas kleineren Haxafluoridkonzentration hergestellten Monomodefaser, die stark ausgeprägte zentrale Brechzahlsenke aufweist.

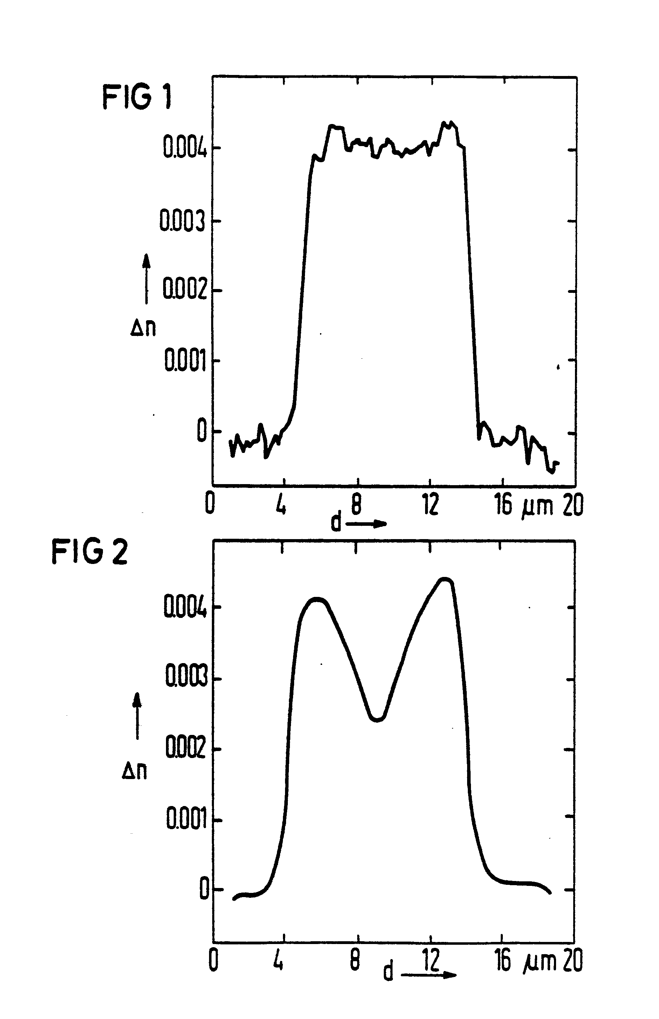

In den Figuren ist auf der Abszisse der Faserdurchmesser .d in μm aufgetragen, während auf der Ordinate die Brechzahldifferenz $\Delta n$ zwischen Kern und Mantel der Faser aufgetragen ist. Der Kerndurchmesser der Faser nach Figur 1 beträgt etwa 9,1 μm, während der Kerndurchmesser der Faser nach Figur 2 mit der zentralen Brechzahlsenke etwa 9,8 μm beträgt.

Bei der Herstellung der Monomodefaser mit dem Brechzahlprofil nach Figur 1 wurden während des Kollabierens 250 Nml/min Sauerstoff ($O_2$) une 16 Nml/min Schwefelhexafluorid ($SF_6$) durch das Rohr geleitet.

Bei der Herstellung der Monomodefaser mit dem Brechzahlprofil nach Figur 2 wurden während des Kollabierens 500 Nml/min Sauerstoff und 2 Nml/min Schwefelhexafluorid durch das Rohr geleitet.

In beiden Fällen wurde ein Glasrohr mit einem Innendurchmesser vor Beginn des Kollabierens von 17 mm und einem Außendurchmesser von 20 mm verwendet. Die Temperatur zum Kollabieren wurde so eingestellt, daß das Rohr nach 6 Beheizungszyklen vollständig kollabiert ist. Die Temperatur betrug etwa 2 050 °C.

Bei der Herstellung der Faser nach Figur 1 wurde während der ersten drei Brennerdurchläufe kein oder nur eine geringe Menge Schwefelhexafluorid durch das Rohr geleitet. Nur beim vierten Brennerdurchlauf wurde die Ätzgasmischung aus 250 Nml/min Sauerstoff und 16 Nml/min Schwefelhexafluorid durch das Rohr geleitet und dadurch die Innenfläche des Rohres scharf geätzt. Die beiden restlichen Brennerdurchläufe dienten zur vollständigen Kollabierung des Rohres zum Stab und erfolgten ohne Zugabe von Ätzgas.

Bei der Herstellung der Faser nach Figur 2 wurden dagegen bei jedem der ersten vier Brennerdurchläufe 500 Nml/min Sauerstoff und 2 Nml/min Schwefelhexafluorid durch das Rohr geleitet. Diese Ätzgasmischung bewirkt dabei eine geringfügige Ätzung der Innenwand des Rohres, darüber hinaus aber eine Diffusion von Fluor in das Glas, deren Diffusionsgeschwindigkeit größer ist als die Ätzrate und wodurch die gewünschte Brechzahlsenke bewirkt wird. Die beiden restlichen Brennerdurchläufe dienten wieder zur vollständigen Kollabierung des Rohres zum Stab und erfolgtem wiederum ohne Zugabe der Ätzgasmischung.

In beiden Fällen bestanden die inneren Schichten des verwendeten Glasrohres aus $SiO_2$, das mit 5 Gew.-% $GeO_2$ dotiert war.

Generell ist bei der Herstellung von Fasern mit zentraler Brechzahlsenke nach einem hier beschriebenen Verfahren unter Verwendung von Ätzgas darauf zu achten, daß die Diffusionsfront oder Diffusionsgeschwindigkeit größer ist als die Ätzfront oder Ätzgeschwindigkeit größer ist als die Ätzfront oder Ätzgeschwindigkeit. Wenn dies nicht der Fall ist, kann sich keine Dotierung ausbilden.

## Patentansprüche

1. Verfahren zur Herstellung einer Glasfaser mit einem bestimmten radialen Brechzahlprofil, bei dem ein Glasrohr zu einer Vorform kollabiert wird, bei dem das Kollabieren in Gegenwart eines das Rohrmaterial ätzenden Ätzgases im Inneren des Rohres vorgenommen wird, dadurch gekennzeichnet, daß das Kollabieren in Gegenwart eines die Brechzahl des Rohres erniedrigenden diffusionsfähigen Dotierstoffes im Inneren des Rohres vorgenommen wird und daß dabei die Ätzgaskonzentration so gewählt wird, daß die Diffusionsfront des Dotierstoffes schneller als die Ätzfront ist.

2. Verfahren nach Anspruch 1, dadurch gekennzeichnet, daß das Ätzgas den Dotierstoff chemisch gebunden enthält.

3. Verfahren nach Anspruch 2, dadurch gekennzeichnet, daß das Ätzgas aus einer Fluorverbindung besteht.

4. Verfahren nach Anspruch 3, dadurch gekennzeichnet, daß die Fluorverbindung aus Schwefelhexafluorid besteht.

5. Verfahren nach einem der vorhergehenden Ansprüche, dadurch gekennzeichnet, daß das Kollabieren in Gegenwart von Sauerstoff vorgenommen wird.

6. Verfahren nach Anspruch 6, dadurch gekennzeichnet, daß während des Kollabierens 500 Nml/min Sauerstoff und 2 Nml/min Schwefelhexafluorid in das Innere des Rohres geleitet werden.

## Claims

1. A method of making a glass fibre with a specific radial refractive index profile, in which a glass tube is collapsed to form a preform, the collapsing being carried out in the presence of an etching gas which etches the tube material within the tube, characterised in that the collapsing is carried out in the presence of a dopant which can be diffused and which lowers the refractive index of the tube ; and that the etching gas concentration is such that the diffusion front of the dopant is faster than the etching front.

2. A method as claimed in Claim 1, characterised in that the etching gas contains the dopant in chemically-bound form.

3. A method as claimed in Claim 2, characterised in that the etching gas consists of a fluorine compound.

4. A method as claimed in Claim 3, characterised in that the fluorine compound consists of sulfur hexafluoride.

5. A method as claimed in one of the preceding Claims, characterised in that the collapsing is carried out in the presence of oxygen.

6. A method as claimed in Claim 6, characterised in that during the collapsing 500 Nml/min of oxygen and 2 Nml/min of sulfur hexafluoride are fed into the interior of the tube.

## Revendications

1. Procédé de fabrication d'une fibre de verre ayant un profil d'indice de réfraction déterminé dans le sens radial, selon lequel un tube de verre est transformé par rétreint en une préforme et selon lequel le rétreint s'opère en présence d'un gaz d'attaque se trouvant à l'intérieur du tube et attaquant le matériau du tube, caractérisé en ce que le rétreint s'opère en présence, à l'intérieur du tube, d'un dopant capable de diffuser et diminuant l'indice de réfraction du tube et que, pour cette opération, la concentration du gaz d'attaque est choisie telle que le front de diffusion du dopant est plus rapide que le front d'attaque.

2. Procédé selon la revendication 1, caractérisé en ce que le gaz d'attaque contient le dopant à l'état chimiquement lié.

3. Procédé selon la revendication 2, caractérisé en ce que le gaz d'attaque est un composé de fluor.

4. Procédé selon la revendication 3, caractérisé en ce que le composé de fluor est l'hexafluorure de soufre.

5. Procédé selon une des revendications précédentes, caractérisé en ce que le rétreint s'opère en présence d'oxygène.

6. Procédé selon la revendication 5, caractérisé en ce que, pendant le rétreint, on introduit 500 Nml/min d'oxygène et 2 Nml/min d'hexafluorure de soufre dans le tube.

FIG 1

FIG 2